(19) Europäisches Patentamt
European Patent Office
Office européen des brevets

(11) EP 2 902 453 A1

(12) EUROPEAN PATENT APPLICATION

(43) Date of publication:
**05.08.2015 Bulletin 2015/32**

(21) Application number: **14153416.4**

(22) Date of filing: **31.01.2014**

(51) Int Cl.:
***C09D 5/16*** *(2006.01)*
***C08G 63/199*** *(2006.01)*
***C09D 167/02*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Jotun A/S**
**3202 Sandefjord (NO)**

(72) Inventor: **Winander, Cecilia**
**3202 Sandefjord (NO)**

(74) Representative: **Campbell, Neil Boyd**
**Dehns**
**St Bride's House**
**10 Salisbury Square**
**London**
**EC4Y 8JD (GB)**

# (54) Antifouling Composition

(57) A binder for a marine antifouling coating composition comprising a polyoxalate polymer with a Mw of at least 4000 g/mol, wherein said polyoxalate polymer comprises (i) a residue of an oxalate monomer selected from oxalic acid or a diester derivative thereof, (ii) a residue of a second monomer selected from a cyclic diester or cyclic diacid and (iii) a residue of a third monomer which is hydrogenated bisphenol A.

EP 2 902 453 A1

## Description

### Field of the Invention

The present invention relates to marine antifouling coating compositions, more specifically to marine antifouling coating compositions comprising a particular class of polyoxalate binder as well as to the binder itself. The invention further relates to kits for the preparation of the antifouling coating compositions or a "one pot" anti-fouling coating composition comprising the new polyoxalate binder. The invention also relates to surfaces coated with the antifouling coating compositions.

### Background

Surfaces that are submerged in seawater are subjected to fouling by marine organisms such as green and brown algae, barnacles, mussels, tube worms and the like. On marine constructions such as vessels, oil platforms, buoys, etc. such fouling is undesired and has economical consequences. The fouling may lead to biological degradation of the surface, increased load and accelerated corrosion. On vessels the fouling will increase the frictional resistance which will cause reduced speed and/or increased fuel consumption. It can also result in reduced manoeuvrability.

To prevent settlement and growth of marine organisms antifouling paints are used. These paints generally comprise a film-forming binder, together with different components such as pigments, fillers, solvents and biologically active substances.

The most successful antifouling coating system on the market until 2003 was a tributyltin (TBT) self-polishing copolymer system. The binder system for these antifouling coatings was a linear acrylic copolymer with tributyltin pendant groups. In seawater the polymer was gradually hydrolysed releasing tributyltin, which is an effective biocide. The remaining acrylic copolymer, now containing carboxylic acid groups, became sufficiently soluble or dispersible in seawater to be washed out or eroded away from the coating surface. This self-polishing effect provided a controlled release of the biologically active compounds in the coating resulting in excellent antifouling efficiency and smooth surfaces and hence reduced frictional resistance.

The IMO Convention "International Convention on the Control of Harmful Anti-fouling Systems on Ships" of 2001 prohibited the application of new TBT containing antifouling coatings from 2003 and TBT containing antifouling coatings were prohibited on ship hulls from 2008.

In recent years new antifouling coating systems have been developed and introduced as a consequence of the TBT ban. One broad group of biocidal antifouling coatings on the market today is the self-polishing antifouling coatings which mimic the TBT self-polishing copolymer coatings. Those antifouling coatings are based on (meth)acrylic copolymers having pendant hydrolysable groups without biocidal properties. The hydrolysis mechanism is the same as in the TBT containing copolymers. This gives the same controlled dissolution of the polymers and thereby the controlled release of antifouling compounds from the coating film, resulting in similar performance as the TBT containing antifouling coating systems. The most successful self-polishing antifouling systems today are based on silyl ester functional (meth)acrylic copolymers. These coating compositions are for example described in, EP 0 646 630, EP 0 802 243, EP 1 342 756, EP 1 479 737, EP 1 641 862, WO 00/77102, WO 03/070832 and WO 03/080747.

The above mentioned antifouling coating systems degrade by hydrolysis of pendant groups on the polymer backbone, which results in a water erodable polymer. The hydrolysis of the pendant groups on the polymer backbone results in the formation of carboxylic acid salts which make the polymer hydrophilic and thereby erodable. A certain amount of hydrolysable groups are needed to get sufficient hydrophilicity and an erodable polymer after hydrolysis. Silyl ester copolymer technology is expensive.

Another way of obtaining water erodable polymers is by introducing hydrolysable groups in the polymer backbone, resulting in degradation of the polymer structure, which gives erosion of the polymer film or coating film. Polyanhydrides are a class of polymers that degrade by backbone hydrolysis. The polyanhydrides are well documented for their surface degradation properties. Surface degradation is one of the most important factors for obtaining a successful antifouling coating. The use of specific aromatic polyanhydrides as binders in antifouling coating compositions is, for example, described in WO 2004/096927.

However, the anhydride group is extremely labile in the presence of moisture and it is therefore difficult to design a coating system based on polyanhydrides that exhibits a slow, controlled hydrolysis for use in antifouling coatings. Accordingly, the polyanhydrides used for antifouling coating compositions generally have a high content of aromatic units in order to control the hydrolysis.

In recent years, polyoxalates have emerged as a class of polymers that are well suited for use as binders in antifouling coatings. Backbone hydrolysis in these compounds is more controlled than for the polyanhydrides but because of the two adjacent carbonyl groups in the oxalate unit, the ester group is activated and labile towards hydrolysis. Polyoxalates also have better solubility in common organic solvents than polyanhydrides.

The use of self polishing binders which hydrolyse in the polymer backbone make it possible to obtain erodable crosslinked polymers and high molecular weight polymers. One of the greatest advantages of the polyoxalate technology over the current commercial solution, the silyl technology, is that the cost of the binder is much lower. Furthermore, solvents levels, and consequently VOC (volatile organic compounds) levels, can be reduced when using polyoxalates compared with silyl copolymers. Legislation controlling levels of VOC is now enforced in many countries. Due to this, it is highly preferred that any antifouling coating has a VOC content of less than 400 g/L.

Polyoxalates are not new compounds. In EP-A-1505097 various polyoxalates are mentioned as being suitable for the formation of shaped articles or films. Moreover, the use of polyoxalates as self-polishing binders in anti-fouling coating compositions is reported in WO 2009/100908. Although these compounds have shown promise in this area of technology, problems still exist in developing a polymer of this class which possesses both good polishing properties and acceptable film hardness.

It is important for a binder used in an antifouling coating composition to have good polishing properties in order to prevent fouling. If the binder displays no polishing, there is very little hydrolysis or release of the biocide and it is ineffective in an antifouling coating. It is, however, also important that the polishing is not too rapid and does not display exponential hydrolysis behaviour since this is indicative of bulk hydrolysis rather than polishing. Bulk hydrolysis causes unwanted swelling of the coating. A linear polishing rate is desirable in order for the antifouling coating to last and for its properties to be predictable during the sailing interval of the vessel. Moreover, it is necessary that the coating composition is resistant to swelling as this will lead to eventual collapse of the paint film. In this regard, the inventors have found that the use of an oxalate monomer alone increases the risk of such swelling.

Furthermore, the coating needs a sufficient hardness in order to be resistant to the mechanical impact to which vessels and other marine constructions are often exposed. Developing a polyoxalate binder which fulfils some or all of these criteria has proved challenging. Ideally, a good balance of all these properties is desirable.

The object of the present invention is to provide an antifouling coating composition which comprises a polyoxalate binder, which combines good polishing properties, in particular a linear polishing rate, with acceptable film hardness. Surprisingly, some or all of these objectives may be attained by the use of a specific class of polyoxalates, prepared using a particular diol monomer, as the binder in an antifouling coating composition.

The present inventors also unexpectedly found that coating compositions comprising the polyoxalate binder of the invention display an attractive balance of properties without the need for curing. This offers the additional advantage of being able to formulate a "one-pot" paint, which reduces application times since no premixing is required. It also eliminates the problem of limited pot life and the risk of using incorrect mixing ratios associated with two componentpaint compositions.

**Summary of the Invention**

Thus, viewed from one aspect the invention provides a binder for a marine antifouling coating composition comprising:

a polyoxalate polymer with a Mw of at least 4000 g/mol, wherein said polyoxalate polymer comprises:

(i) a residue of an oxalate monomer selected from oxalic acid or a diester derivative thereof;
(ii) a residue of a second monomer selected from a cyclic diester or cyclic diacid; and
(iii) a residue of a third monomer which is hydrogenated bisphenol A.

Alternatively viewed, the invention provides a polyoxalate binder for a marine antifouling coating composition having a Mw of at least 4000 g/mol obtainable by the copolymerisation of:

(i) an oxalate monomer selected from oxalic acid or a diester derivative thereof;
(ii) a second monomer which is a cyclic diester or cyclic diacid; and
(iii) a third monomer which is hydrogenated bisphenol A.

Viewed from another aspect the invention provides a marine antifouling coating composition comprising:

(I) a polyoxalate polymer binder with a Mw of at least 4000 g/mol, wherein said polyoxalate polymer comprises:

(i) a residue of an oxalate monomer selected from oxalic acid or a diester derivative thereof;
(ii) a residue of a second monomer selected from a cyclic diester or cyclic diacid; and
(iii) a residue of a third monomer which is hydrogenated bisphenol A; and

(II) a marine antifouling agent.

Viewed from another aspect the invention provides a process for the preparation of a binder for a marine anti-fouling coating composition comprising polymerising

(i) an oxalate monomer selected from oxalic acid or a diester derivative thereof;
(ii) a second monomer which is a cyclic diester or cyclic diacid; and
(iii) a third monomer which is hydrogenated bisphenol A so as to form a polyoxalate polymer with a Mw of at least 4000 g/mol.

Viewed from another aspect the invention provides a process for the preparation of a marine anti-fouling coating composition comprising polymerising

(i) an oxalate monomer selected from oxalic acid or a diester derivative thereof;
(ii) a second monomer which is a cyclic diester or cyclic diacid; and
(iii) a third monomer which is hydrogenated bisphenol A so as to form a polyoxalate polymer with a Mw of at least 4000 g/mol; and
combining said polyoxalate polymer with at least one marine antifouling agent to form said anti-fouling coating composition.

Viewed from another aspect the invention provides a process for protecting an object from fouling comprising coating at least a part of said object which is subject to fouling with an anti-fouling coating composition as hereinbefore described.

Viewed from another aspect the invention provides an object coated with an anti-fouling coating composition as hereinbefore defined.

**Definitions**

It will be clear that the polyoxalate polymer is formed through the polymerisation of, at least, the various monomers identified above. Other monomers can also be used in the manufacturing process. The term monomer residue refers to the actual repeating unit present in the polymer backbone which is formed from the monomer during the polymerisation process.

The term cyclic diester or a cyclic diacid refers to a compound in which two ester groups or two carboxylic acids are directly bound to the same ring system. It does not therefore cover a linear diester in which the terminal ester groups are cyclic for example, such as $PhO_2CCH2CH2CO_2Ph$.

**Detailed Description**

The antifouling coating composition of the invention comprises a polyoxalate polymer. The polyoxalate performs the role of the binder in the composition. The term binder is a term of this art. The binder is the actual film forming component of an antifouling composition. The binder imparts adhesion and binds the components of the composition together.

**Polyoxalate**

The polyoxalate which is used in the invention may be a linear or branched polymer. It is a copolymer formed from at least three different monomers, e.g. a random copolymer or block copolymer. It will be appreciated that any polyoxalate of the invention comprises sufficient repeating units in order to achieve a Mw of at least 4000 g/mol.

The polyoxalate of the invention is formed from the polymerisation of an oxalate monomer, selected from oxalic acid or a diester derivative thereof (i) and at least two further monomers. The second monomer (ii) can be a cyclic diacid or a cyclic diester and the third monomer (iii) is hydrogenated bisphenol A.

The polyoxalates of the present invention can be prepared by condensation polymerisation using any of various methods known and used in the art.

Optionally the polycondensation is carried out in the presence of a catalyst. The catalyst preferably comprises at least one member selected from compounds of magnesium, calcium, titanium, zirconium, vanadium, manganese, iron, cobalt, zinc, aluminium, germanium, tin, phosphorus and antimony. Among the compounds organometallic compounds are preferred, more preferably organic titanium compounds and organic tin compounds. Examples of organic titanium compounds include titanium alkoxides, such as triisopropyl titanate, titanium tetraisopropoxide, titanium glycolates, titanium butoxide, hexyleneglycol titanate and tetraisooctyl titanate. Examples of organic tin compounds include tin 2-ethylhexanoate, dibutyltin dilaurate, monobutyltin tris(2-ethylhexanoate), dibutyltin oxide, dioctyltin oxide and monobutyltin oxide.

The oxalate monomer used in the polymerisation reaction is oxalic acid or a diester derivative thereof. Esters may be alkyl esters, alkenyl esters, cycloalkyl esters or aryl esters. Examples of suitable diester derivatives of oxalic acid include those of Formula (I) below:

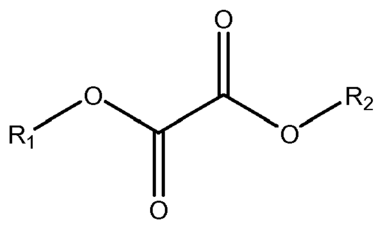
(I)

wherein $R_1$ and $R_2$ are each independently selected from a straight or branched chain $C_{1-20}$ alkyl group, preferably $C_{1-10}$ alkyl group, most preferably $C_{1-6}$ alkyl group (e.g. methyl or ethyl); a straight or branched chain $C_{2-10}$ alkenyl group, preferably $C_{2-6}$ alkenyl group; a $C_{6-20}$ aryl group, preferably $C_{6-10}$ aryl group; a $C_{7-20}$ arylalkyl group, preferably $C_{7-12}$ arylalkyl group and a $C_{3-20}$ cycloalkyl group, preferably $C_{4-15}$ cycloalkyl group, especially $C_{5-10}$ cycloalkyl group. $R_1$ and $R_2$ may be the same or different, preferably the same. In any arylalkyl group the link to the O atom may be from the alkyl portion or aryl portion of the substituent, preferably therefore forming tolyl or benzyl.

Preferably, the oxalate monomer (i) is selected from the group of oxalic acid and dialkyl oxalates. Dialkyl oxalates are especially preferred such as di$C_{1-10}$alkyl oxalates. Examples of dialkyl oxalates include dimethyl oxalate, diethyl oxalate, dipropyl oxalate and dibutyl oxalate, especially diethyl oxalate, i.e. the compound of Formula (I) wherein $R_1$ and $R_2$ are both ethyl.

In all embodiments of the invention, unless otherwise stated, any alkyl group, alkenyl group, cyclic group or aryl group may be optionally substituted with one or more functional groups, e.g. ester, acid, amino or hydroxyl groups. Ideally however, no such groups are present.

It is within the scope of the invention for a mixture of oxalate monomers to be used in the preparation of the polyoxalates of the invention. Where a mixture is employed, the use of two dialkyl oxalates is preferred. Ideally, however, only one oxalate monomer is used in the polymerisation reaction, e.g. a diester derivative of oxalic acid, such as a dialkyl oxalate as hereinbefore defined.

Preferably, the oxalate monomer (i) is present in an amount of greater than 20 mol%, preferably greater than 25 mol% (e.g. 25 to 40 mol%), relative to the amount of monomer(s) in total. In some embodiments, the oxalate monomer is present in an amount of up to 45 mol%, preferably up to 40 mol%, more preferably up to 35 mol%, relative to the amount of monomer(s) in total. This amount of oxalate monomer reflects the total mol% of all oxalate monomers (i) present in the polyoxalate of the invention (i.e. summing monomer contents if more than one oxalate is employed).

If, as preferred, there is only one oxalate monomer then these figures apply to that one monomer only.

In addition to a residue of the oxalate monomer (i), the polyoxalate used in the invention comprises a residue of a second monomer (ii) selected from a cyclic diester or a cyclic diacid. It has surprisingly been found that the use of this specific type of comonomer leads to an increase in hardness of the polyoxalate polymer. Thus, the antifouling coating compositions of the invention, and any paint film produced therefrom, possess particularly attractive film hardness properties. The addition of this second monomer is also of value as it decreases the risk of swelling and collapse of the paint film, compared to one prepared using only an oxalate monomer.

Examples of cyclic dicarboxylic acids include those of Formula II shown below:

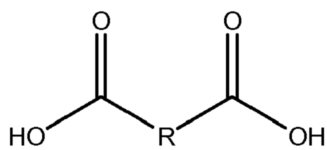
(II)

wherein R is a saturated, unsaturated or aromatic $C_3$-$C_8$ ring, preferably a $C_5$-$C_6$ ring, optionally comprising one or more heteroatoms selected from the group consisting of N, O and S. Examples of heterocyclic rings include furan (e.g. giving the compound furan-2,5-dicarboxylic acid). Most preferably R is a phenyl group. The two carboxylic acid groups may occupy any position on the ring. For example, where R is a $C_6$ ring, the two carboxylic acid groups may be *ortho, meta* or *para* with respect to each other. The two carboxylic acid groups should not bind to the same carbon atom.

Examples of cyclic diesters include those of Formula III shown below:

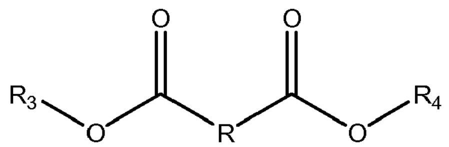

(III)

wherein R is a saturated, unsaturated or aromatic $C_3$-$C_8$ ring, preferably a $C_5$-$C_6$ ring, optionally comprising one or more heteroatoms selected from the group consisting of N, O and S. It will be appreciated that if a heteroatom is present in the ring that the two ester groups bind on carbon atoms in the ring. The two ester groups may occupy any position on the ring. For example, where R is a $C_6$ ring, the two ester groups may be *ortho, meta* or *para* with respect to each other, preferably meta. $R_3$ and $R_4$ in Formula (III) are each independently a straight or branched chain $C_{1-20}$ alkyl group, preferably a $C_{1-10}$ alkyl group, more preferably $C_{1-6}$ alkyl group, more preferably a $C_{1-4}$ alkyl group, especially methyl; a straight or branched chain $C_{2-10}$ alkenyl group, preferably $C_{2-6}$ alkenyl group; a $C_{6-20}$ aryl group, a $C_{7-20}$ arylalkyl group, preferably $C_{7-12}$ arylalkyl group, preferably $C_{6-10}$ aryl group; and a $C_{3-20}$ cycloalkyl group, preferably $C_{4-15}$ cycloalkyl group, especially $C_{5-10}$ cycloalkyl group. $R_3$ and $R_4$ may be the same or different, preferably the same.

Preferably, the cyclic diester is an aromatic diester, such as one of Formula IV shown below:

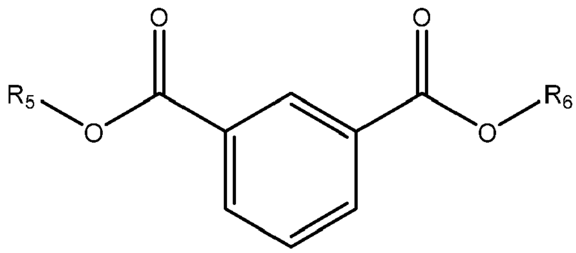

(IV)

wherein $R_5$ and $R_6$ are each independently a straight or branched chain $C_{1-20}$ alkyl group, preferably a $C_{1-10}$ alkyl group, more preferably $C_{1-6}$ alkyl group, more preferably a $C_{1-4}$ alkyl group, especially methyl. $R_5$ and $R_6$ may be the same or different, preferably the same. A particularly preferred cyclic diester is dimethyl isophthalate. Analogues of compounds of Formula IV, wherein the two ester groups on the phenyl ring are *ortho* or *para* to each other are equally applicable for use in the present invention.

As discussed above, in all embodiments of the invention, unless otherwise stated, any alkyl group, alkenyl group, cyclic group or aryl group may be optionally substituted with one or more functional groups, e.g. ester, acid, amino or hydroxyl groups. Ideally however, no such groups are present. It is particularly preferred if the second monomer (ii) does not contain an hydroxyl functional group in addition to a carboxylic acid functional group.

In a most preferred embodiment, the second monomer (ii) is dimethyl isophthalate.

As noted above, there can be one or more than one monomer fitting the requirements of the second monomer. The figures which follow are based on the total content of second monomers in the polyoxalate. Preferably, the second monomer(s) (ii) is present in an amount of greater than 5 mol%, preferably greater than 8 mol%, more preferably greater than 10 mol% (e.g. at least 15 mol%) relative to the total amount of monomers in the polyoxalate as a whole. In some embodiments, the second monomer (ii) is present in an amount of up to 35 mol%, preferably up to 30 mol%, more preferably up to 25 mol% relative to the total amount of monomers in the polyoxalate as a whole. It is preferred that the mol% of the second monomer does not exceed these upper values as too high a level of this component may lead to diminished polishing properties.

The polyoxalate of the invention further comprises a residue of a third monomer (iii) which is hydrogenated bisphenol A (4,4'-isopropylidenedicyclohexanol). It has the following structure:

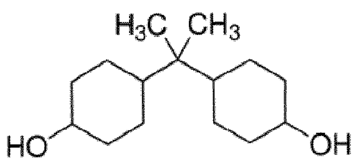

This cyclic diol gives polyoxalates with surprisingly high glass transition temperatures, Tg. Moreover, the present inventors have surprisingly found that the use of this specific cyclic diol leads to polyoxalates which, when used in

antifouling coating compositions, produce paints which do not need to be cured in order to attain sufficient hardness and polishing properties. In a preferred embodiment, therefore, the antifouling coating compositions of the invention do not comprise a curing agent. Similarly, it is preferred if the antifouling coating compositions of the invention are not cured.

The absence of the need for a curing agent means that, in a preferable embodiment, the antifouling coating composition of the invention is a single pot coating. This avoids many additional costs and inconveniences.

Preferably, hydogenated bisphenol A (iii) is present in an amount of greater than 0.1 mol%, preferably greater than 0.5 mol%, more preferably greater than 2 mol% (e.g. at least 5 mol%) relative to the amount of monomer(s) in total. In some embodiments, hydogenated bisphenol A (iii) is present in an amount of up to 30 mol%, preferably up to 25 mol%, more preferably up to 20 mol% relative to the amount of monomer(s) in total. A relatively high amount of hydrogenated bisphenol A (iii) may be present without giving rise to a partially crystalline polyoxalate.

It will be appreciated that in addition to the oxalate monomer (i), the second monomer (ii) and the third monomer (iii), the polyoxalate used in the antifouling coating compositions of the invention may further comprise additional monomers. It is firstly appreciated that there might be more than one monomer (i) or (ii). Any additional monomers may have a different structure such as those defined below.

Additional monomers may include diacids, diesters or, more preferably, diols.

It is preferred therefore if the polyoxalate of the invention comprises not only the residue of hydrogenated bisphenol A but the residue of a further different diol monomer (iv). Examples of diols include saturated aliphatic and saturated cycloaliphatic diols, unsaturated aliphatic diols or aromatic diols. It is preferred if the polyoxalate comprises a saturated aliphatic and the hydrogenated bisphenol A.

Preferred diols include $C_{3-20}$ aliphatic or $C_{4-20}$-cycloaliphatic diols such as 1,3-propanediol, 1,2-butanediol, 1,3-butanediol, 1,4-butanediol, 2,3-butanediol, 1,2-pentanediol, 1,4-pentanediol, 1,5-pentanediol, 2,4-pentanediol, 1,2-hexanediol, 1,5-hexanediol, 1,6-hexanediol, 2,5-hexanediol, 1,7-heptanediol, 1,2-octanediol, 1,8-octanediol, 1,9-nonanediol, 1,10-decanediol, 1,2-dodecanediol, 1,12-dodecanediol, 1,14-tetradecanediol, 1,2-hexadecanediol, 1,16-hexadecanediol, 2,2-dimethyl-1,3-propanediol (neopentyl glycol), 3-methyl-1,3-butanediol, 3-methyl-1,5-pentanediol, 2-methyl-2,4-pentanediol, 2,3-dimethyl-2,3-butanediol, 2,2-diethyl-1,3-propanediol, 2,4-dimethyl-2,4-pentanediol, 2-methyl-2-propyl-1,3-propanediol, 2,2,4-trimethyl-1,3-pentanediol, 2,5-dimethyl-2,5-hexanediol, 2-ethyl-1,3-hexandiol, 2-butyl-2-ethyl-1,3-propanediol, 2,2-dibutyl-1,3-propanediol, 2-butyl-2-ethyl-1,3-propanediol, 1,2-cyclohexanediol, 1,3-cyclohexanediol, 1,4-cyclohexandiol, 1,2-cyclohexanedimethanol, 1,3-cyclohexanedimethanol, 1,4-cyclohexanedimethanol, cyclododecanediol, dipropylene glycol, triethylene glycol, pentaethylene glycol, hexaethylene glycol, hydroxypivalyl hydroxypivalate, 3,9-bis(1,1-dimethyl-2-hydroxyethyl)-2,4,8,10-tetraoxaspiro[5.5]undecane (spiroglycol), 2,2,4,4-tetramethyl-1,3-cyclobutanediol and isohexides, such as 1,4:3,6-dianhydro-D-glucitol (isosorbide), 1,4:3,6-dianhydro-D-mannitol (isomannide) and 1,4:3,6-dianhydro-L-iditol (isoidide), and mixtures thereof. Preferred diols are $C_{3-10}$ aliphatic or $C_{5-10}$-cycloaliphatic diols such as 1,6-hexanediol, 1,4-cyclohexanedimethanol and 2-butyl-2-ethyl-1,3-propanediol.

Preferred unsaturated aliphatic diols are $C_{4-20}$ unsaturated aliphatic diols such as 2-butene-1,4-diol, 3-butene-1,2-diol, 3-hexene-1,6-diol and monoolein.

Preferred aromatic diols are $C_{6-20}$ aromatic diols such as hydroquinone, methylhydroquinone, resorcinol, 2-methylresorcinol, pyrocatechol, 1,2-benzenedimethanol, 1,3-benzenedimethanol, 1,4-benzenedimethanol, bisphenol A, bisphenol E, bisphenol F, bisphenol M, bisphenol P, bisphenol S, bisphenol Z, bisphenol AF, bisphenol AP, 4,4'-dihydroxybenzophenone, 4,4'-biphenol, 2,2'-biphenol, 1,2-dihydroxynaphthalene, 1,4-dihydroxynaphthalene, 1,5-dihydroxynaphthalene, 1,6-dihydroxynaphthalene, 1,7-dihydroxynaphthalene, 2,3-dihydroxynaphthalene, 2,6-dihydroxynaphthalene, 2,7-dihydroxynaphthalene, and 1,8-naphthalenedimethanol.

Thus, in a preferred embodiment, the polyoxalates of the invention comprise at least one further diol (iv) which is different to hydrogenated bisphenol A. The use of 2-butyl-2-ethyl-1,3-propanediol, 1,4-Cyclohexanedimethanol and 1,6-Hexanediol along with the hydrogenated bisphenol A (iii) is preferred.

The starting materials for the preparation of the polyoxalates are preferably used in a molar ratio between the oxalate monomer (i) and the second monomer (ii) of 4:1 to 1:2, preferably 3:1 to 1:1, e.g. 2:1. Preferably, the oxalate monomer is in excess relative to the second monomer. In some embodiments, the second monomer is in excess. Preferable, the molar ratio between the total amount of monomers (i) and (ii) and total amount of diol monomers (component (iii) plus any optional additional diols) is 90:100 to 100:90, preferably 95:100 to 100:95, most preferably 100:100.

The polyoxalate polymer architecture will influence the polymer properties. Branching in polymers and "star" shaped polymers are examples of useful structural variables that can be used advantageously to modify polymer properties such as solubility in organic solvents, miscibility in polymer blends, reduce crystallinity of the polymer and mechanical properties.

In order to obtain branching or star structure in the polyoxalates, the polycondensation may be carried out in the presence of a compound with more than two functional groups, e.g. three functional groups that can take part in the polymerisation reaction. Examples of suitable compounds include polyols, e.g. $C_{3-20}$ polyols such as glycerol, trimethylolmethane, trimethylolethane, trimethylolpropane, 1,2,4-butanetriol, 1,2,6-hexanetriol, erythritol, pentaerythritol, di(trimethylolpropane) 1,2,7,8-octanetetrol triglycerol, dipentaerythritol, pyrogallol and phloroglucinol;

polycarboxylic acids, e.g. $C_{4-20}$ polycarboxylic acids such as trimellitic acid, trimesic acid and pyromellitic acid;
alkyl esters of polycarboxylic acid such as trimethyl trimellitate; and
anhydrides of polycarboxylic acid such as trimellitic anhydride and pyromellitic dianhydride. The term "poly" is used in relation to these branching monomers to mean the presence of 3 or more functional groups (i.e. acid groups, hydroxyl groups etc) in the molecule.

Examples of other suitable polyfunctional compounds include malic acid, tartaric acid and citric acid.

Polyols with more than two hydroxyl groups are the preferred compounds for obtaining branched and star-shaped polyoxalates. The amount of any branching reactant, e.g. polyol should preferably be 10 mol% or less of the total amount of that reactant type, e.g. of the diols/polyols combined. Too much branching leads to gelling and a composition which cannot be applied to an object.

Optionally, other functional compounds can be included as comonomers to adjust the polymer properties of the polyoxalates. Such compounds can be used to adjust parameters such as hydrolysis rate and mechanical properties. These functional compounds preferably possess two reactive functional groups e.g. two ester, acid, amino or hydroxyl groups or mixtures thereof and will be called bifunctional compounds. These compounds can form additional monomers in the polymerisation process. Examples of suitable bifunctional compounds include:

alkyl esters of dicarboxylic acids such as dimethyl terephthalate, dimethyl isophthalate, dimethyl phthalate,dimethyl malonate, dimethyl isobutylmalonate, dimethyl succinate, dimethyl glutarate, dimethyl adipate, dimethyl pimelate, dimethyl suberate, dimethyl azelate, dimethyl sebacate, dimethyl brassylate, dimethyl glutaconate, diethyl malonate, diethyl methylmalonate, diethyl succinate, diethyl glutarate, diethyl adipate, diethyl pimelate, diethyl suberate, diethyl azelate, diethyl sebacate, dibutyl succinate, dibutyl adipate and dibutyl sebacate;
dicarboxylic acids such as terephthalic acid, isophthalic acid, phthalic acid, 1,4-phenylenediacetic acid, 1,3-phenylenediacetic acid, 1,2-phenylenediacetic acid, cyclohexanedicarboxylic acid, maleic acid, fumaric acid, malonic acid , isobutylmalonic acid , succinic acid, glutaric acid , adipic acid, pimelic acid , suberic acid , azelaic acid, sebacic acid , dodecanoic acid, brassylic acid, glutaconic acid and dimer fatty acids;
dicarboxylic acid anhydrides such as succinic anhydride, maleic anhydride, citraconic anhydride, glutaric anhydride, diglycolic anhydride, phthalic anhydride, tetrahydrophthalic anhydride, hexahydrophthalic anhydride, 5-norbornene-2,3-dicarboxylic anhydride and 1,8-naphthalic anhydride;
alkyl esters of hydroxyl functional carboxylic acids such as, methyl 3-hydroxybenzoate, methyl 4-hydroxybenzoate, methyl vanillate, methyl 4-hydroxyphenylacetate, ethyl 3-hydroxybenzoate, ethyl 4-hydroxybenzoate, methyl 3-hydroxybutyrate, methyl 2-hydroxyisobutyrate, methyl 10-hydroxydecanoate, ethyl 3-hydroxybutyrate, ethyl 2-hydroxyisobutyrate, ethyl 2-hydroxyhexanoate and ethyl 6-hydroxyhexanoate;
hydroxyl functional carboxylic acids such as salicylic acid, 3-hydroxybenzoic acid, 4-hydroxybenzoic acid, vanillic acid, 2-hydroxyphenylacetic acid, 3-hydroxyphenylacetic acid, 4-hydroxyphenylacetic acid, glycolic acid, 3-hydroxybutyric acid, 2-hydroxyisobutyric acid and ricinoleic acid;
diamines such as 1,2-ethanediamine, 1,2-propanediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,12-dodecanediamine, 2-methyl-1,5-pentanediamine, 2-butyl-2-ethyl-1,5-pentanediamine, 2,2,4- and 2,4,4-trimethyl-1,6-hexanediamine, O,O'-bis(3-aminopropyl)ethylene glycol, O,O'-bis(3-aminopropyl)diethylene glycol, 1,2-diaminocyclohexane, 1,4-diaminocyclohexane, 1,2-phenylenediamine, 1,3-phenylenediamine, 1,4-phenylenediamine, 1,3-bis(aminomethyl)benzene, 1,4-bis(aminomethyl)benzene, 1,4-diaminonaphthalene, 1,5-diaminonaphthalene, 1,8-diaminonaphthalene, 4,4'-methylenedianiline, 4,4'-oxydianiline and 1,1,1-tris(aminomethyl)ethane.

Any alkyl ester of dicarboxylic acid, dicarboxylic acid anhydrides, diamines, hydroxyl functional carboxylic acid, alkyl ester of hydroxyl functional carboxylic acid or dicarboxylic acid used herein may have up to 20 carbon atoms.

Polyoxalate copolymers are obtained by mixing all starting materials before polymerisation. By mixing all reactants, the polyoxalate which forms is typically a statistical random polymer of all the monomers used (i.e. the amount of each monomer incorporated essentially reflects the amount of each monomer in the starting mixture). Polyoxalate block polymers are obtained either by subsequent addition of starting materials during the polymerisation process after an initial polymerisation of only two monomers or preparation of block polymers that are linked together.

The polymerisation conditions can be widely varied although typically temperatures of 100 to 250°C are employed, e.g. 120 to 220°C. During condensation polymerisation a condensate (normally water or an alcohol) is formed. This is preferably removed by distillation as the polymerisation continues. This can be achieved under reduced pressure. The polymerisation is preferable carried out in an inert atmosphere, e.g. nitrogen.

The polyoxalates of the present invention have a weight average molecular weight (Mw) of at least 4000 g/mol, preferably at least 4500 g/mol, more preferably at least 5000 g/mol, such as at least 5200 g/mol. The weight average molecular weight is preferably up to 30,000 g/mol, preferably up to 20,000 g/mol, such as up to 15,000 g/mol. There is however a trade off here as increasing the Mw too far increases viscosity and means that more solvent is required to

ensure that the coating composition can be applied. More solvent increases volatile organic content which is not desired.

The molecular weight of the polyoxalate is important in terms of obtaining a film with sufficient hardness. The present inventors have surprisingly found that polyoxalates with weight average molecular weights within the ranges quoted herein possess sufficient hardness, without the need for a curing agent. High molecular weights are associated with high viscosities which in turn leads to high levels of undesirable volatile organic compounds. The production time required to manufacture a polyoxalate with high molecular weight is also longer. The longer the production time the higher the production cost of the polymer.

The polyoxalate of the invention should preferably have a glass transition temperature (Tg) in the range 0-100 °C, more preferably 5-60 °C, especially 10-50 °C.

In a further preferred embodiment of the invention, the polyoxalate is amorphous. By amorphous is meant that the polyoxalate does not have a discernable melting point, i.e. it is not crystalline. The use of an amorphous polyoxalate increases the solubility in the organic solvent typically used in the antifouling composition so the use of amorphous polyoxalates is preferred.

It is preferred that any polyoxalate used in this invention has a solubility of at least 50 wt% in the solvent used in the antifouling composition, preferably at least 75 wt% in the solvent such as at least 95 wt% in the solvent. For example therefore at least 1 kg of polyoxalate should dissolve in 1 kg of solvent. Preferred solvents are discussed below. Xylene is especially preferred.

It is preferred if the polyoxalate forms at least 3 wt%, e.g. at least 5 wt%, perhaps at least 10 wt% of the antifouling coating composition, such as at least 20 wt%. In some embodiments, the polyoxalate binder component may form up to 50 wt% of the anti-fouling coating composition, preferably up to 40 wt%, especially up to 35 wt%. The skilled man will appreciate that the level of polyoxalate binder employed will depend on the amount of antifouling compound employed, e.g. the amount of cuprous oxide.

The solubility of the polyoxalates can, for example, be improved by using flexible building blocks and/or by branching of the polymer by using multifunctional building blocks, in particular the bifunctional building blocks as discussed above.

**Curing Agent**

The polyoxalate binder may be combined with a curing agent in the antifouling coating compositions of the invention. However, as stated above, it is preferred if no curing agent is present.

Polyoxalates have functional end groups that react with curing agents such as chain extenders or crosslinkers. Examples of curing agents well known in the art include, for example, monomeric isocyanates, polyisocyanates and isocyanate prepolymers. Polyisocyanates are preferred over monomeric isocyanates because of lower toxicity. Polyisocyanates can for example be based on diphenylmethane diisocyanate (MDI), toluene diisocyanate (TDI), hexamethylene diisocyanate (HDI) and isophorone diisocyanate (IPDI) chemistry. These are, for example, supplied under the tradename Desmodur by Bayer Material Science and Tolonate by Vencorex. Examples of polyisocyanates are Desmodur N3400, Desmodur N75, Desmodur XP2580, Desmodur Z4470, Desmodur XP2565 and Desmodur VL, supplied by Bayer Material Science.

Polyisocyanates can be made with different NCO-functionality. The NCO-functionality is the amount of NCO-groups per polyisocyante molecule or isocyanate prepolymer molecule. Polyisocyanates with different NCO-functionality can be used.

The curing agent is preferably present in an amount of 0.8-1.5 equivalents (equiv) NCO groups relative the amount of hydroxyl groups, preferably 0.9-1.4 equiv, more preferably 0.95-1.3 equiv, even more preferably 1-1.2 equiv.

If present, the curing agent is preferably present in an amount of between 0.005 and 0.5 wt% relative to the polyoxalate, preferably 0.01 to 0.2 wt%, more preferably 0.012 to 0.15 wt%.

In addition, a curing catalyst can be used. Examples of such catalysts are tin catalysts, e.g. dibutyltin dilaurate.

It will be appreciated that mixing of the polyoxalate polymer and the curing agent is carried out shortly before application of the coating to an object, e.g. an hour or less before coating. It is preferred therefore if the curing agent is supplied separately to the rest of the anti-fouling coating composition to prevent curing before the coating has been applied to the object. Hence the coating composition of the invention can be supplied as a multipack (preferably two pack) formulation.

Thus, viewed from another aspect the invention provides a kit suitable for the preparation of a marine antifouling coating composition comprising a first part (A)

(I) a polyoxalate polymer with a Mw of at least 4000 g/mol, wherein said polyoxalate comprises:

(i) a residue of an oxalate monomer selected from oxalic acid or a diester derivative thereof;
(ii) a residue of a second monomer selected from a cyclic diester or cyclic diacid; and

(iii) a residue of a third monomer which is hydrogenated bisphenol A ; and optionally a marine antifouling agent; and
a second part (B) comprising a curing agent.

## Composition

The antifouling coating composition of the invention should preferably have a solids content above 45 wt%, e.g. above 50 wt%, such as above 55 wt%.
Preferably the antifouling coating composition of the invention (i.e. containing a curing agent) should have a content of volatile organic compounds (VOC) less than 420 g/L, more preferably less than 410 g/L, such as less than 400 g/L, especially less than 395 g/L. VOC content can be calculated (ASTM D5201-01) or measured, preferably measured.
The antifouling coating compositions of the invention display an improved balance of hardness and polishing properties compared to compositions of the prior art. Surprisingly this can be attained without the need for a curing agent.
In preferred embodiments, the antifouling coating composition of the invention has a hardness of at least 20 oscillations, preferably at least 30 oscillations when measured after the paint film has been dried at 50 °C for 72 hours.
The polyoxalates of the present invention will degrade in sea water and release compounds with structural units similar or identical to the starting materials. It will be understood that the degradation reactions which the polyoxalates of the invention undergo is an hydrolysis reaction which occurs in the polymer backbone, i.e. the hydrolysable bonds are present in the polymer backbone. Starting materials which are biologically active towards marine organisms may give polyoxalates which act as anti-fouling agents themselves. Preferably however, the starting materials are chosen from compounds that give polyoxalates that degrade to components that are not biologically active towards marine organisms. In such a scenario, the anti-fouling coating composition of the invention may need to contain at least one compound capable of preventing fouling on an object, e.g. a marine anti-fouling agent (sometimes referred to as a biologically active agent) especially a biocide.
Therefore, in a preferably embodiment, the antifouling coating composition of the present invention further comprises one or more marine anti-fouling agents. Even if the antifouling coating composition of the present invention comprises a biologically active polyoxalate, it may additionally contain one or more marine anti-fouling agents. Preferably, therefore, the antifouling coating compositions of the invention further comprise at least one marine anti-fouling agent, preferably a biocide.
By marine anti-fouling agent is meant any chemical compound that prevents the settlement of marine organisms on a surface, and/or prevents the growth of marine organisms on a surface and/or encourages the dislodgement of marine organisms from a surface. Examples of inorganic marine antifouling agents include copper and copper compounds such as copper oxides, e.g. cuprous oxide and cupric oxide; copper alloys, e.g. copper-nickel alloys; copper salts, e.g. copper thiocyanate, copper sulphide; and barium metaborate.
Examples of organometallic marine antifouling agents include zinc 2-pyridinethiol-1-oxide [zinc pyrithione]; organocopper compounds such as copper 2-pyridinethiol-1-oxide [copper pyrithione], copper acetate, copper naphthenate, copper 8-quinolinonate [oxine-copper], copper nonylphenolsulfonate, copper bis(ethylenediamine)bis(dodecylbenzensulfonate) and copper bis(pentachlorophenolate); dithiocarbamate compounds such as zinc bis(dimethyldithiocarbamate) [ziram], zinc ethylenebis(dithiocarbamate) [zineb], manganese ethylenebis(dithiocarbamate) [maneb] and manganese ethylenebis(dithiocarbamate) complexed with zinc salt [mancozeb].
Examples of organic marine antifouling agents include heterocyclic compounds such as 2-(*tert*-butylamino)-4-(cyclopropylamino)-6-(methylthio)-1,3,5-triazine [cybutryne], 4,5-dichloro-2-*n*-octyl-4-isothiazolin-3-one, 1,2-benzisothiazolin-3-one [DCOIT], 2-(thiocyanatomethylthio)-1,3-benzothiazole [benthiazole], 3-benzo[b]thien-2-yl-5,6-dihydro-1,4,2-oxathiazine 4-oxide [bethoxazin] and 2,3,5,6-tetrachloro-4-(methylsulphonyl)pyridine; urea derivatives such as 3-(3,4-dichlorophenyl)-1,1-dimethylurea [diuron]; amides and imides of carboxylic acids, sulphonic acids and sulphenic acids such as *N*-(dichlorofluoromethylthio)phthalimide, *N*-dichlorofluoromethylthio-*N',N'*-dimethyl-*N*-phenylsulfamide [dichlofluanid], *N*-dichlorofluoromethylthio-*N',N'*-dimethyl-*N*-*p*-tolylsulfamide [tolylfluanid] and *N*-(2,4,6-trichlorophenyl)maleimide; other organic compounds such as pyridine triphenylborane, amine triphenylborane, 3-iodo-2-propynyl *N*-butylcarbamate [iodocarb], 2,4,5,6-tetrachloroisophthalonitrile [chlorothalonil], *p*-((diiodomethyl)sulphonyl)toluene and 4-bromo-2-(4-chlorophenyl)-5-(trifluoromethyl)-1H-pyrrole-3-carbonitrile [tralopyril].
Other examples of marine anti-fouling agents may be tetraalkylphosphonium halogenides, guanidine derivatives, imidazole containing compounds such as 4-[1-(2,3-dimethylphenyl)ethyl]-1H-imidazole [medetomidine] and derivatives, macrocyclic lactones includes avermectins and derivatives thereof such as ivermectine and spinosyns and derivatives thereof such as spinosad, and enzymes such as oxidase, proteolytically, hemicellulolytically, cellulolytically, lipolytically and amylolytically active enzymes.
Preferred marine anti-fouling agents are cuprous oxide, copper thiocyanate, zinc 2-pyridinethiol-1-oxide, copper 2-pyridinethiol-1-oxide, zinc ethylenebis(dithiocarbamate), 2-(*tert*-butylamino)-4-(cyclopropylamino)-6-(methylthio)-1,3,5-triazine, 4,5-dichloro-2-*n*-octyl-4-isothiazolin-3-one, *N*-dichlorofluoromethylthio-*N',N'*-dimethyl-*N*-phenylsulfamide, *N*-dichlorofluoromethylthio-*N',N'*-dimethyl-*N*-*p*-tolylsulfamide and 4-bromo-2-(4-chlorophenyl)-5-(trifluoromethyl)-1H-pyrrole-3-carbonitrile.

Optionally the marine anti-fouling agents may be encapsulated or adsorbed on an inert carrier or bonded to other materials for controlled release.

The marine anti-fouling agents may be used alone or in mixtures. The use of these marine anti-fouling agents is known in anti-fouling coatings and their use would be familiar to the skilled man.

The total amount of marine anti-fouling agent in the antifouling compositions of the invention may be in the range 0.5 to 80 wt%, such as 1 to 70 wt%. It will be appreciated that the amount of this component will vary depending on the end use and the marine anti-fouling agent used.

Furthermore, the antifouling coating composition according to the present invention optionally comprises one or more components selected among other binders, pigments, extenders and fillers, stabilizers, dehydrating agents and drying agents, additives, solvents and thinners.

An additional binder can be used to adjust the self-polishing properties and the mechanical properties of the antifouling coating film. Examples of binders that can be used in addition to the polyoxalate in the antifouling coating composition according to the present invention include rosin materials such as wood rosin, tall oil rosin and gum rosin; rosin derivatives such as hydrogenated and partially hydrogenated rosin, disproportionated rosin, dimerised rosin, polymerised rosin, maleic acid esters, fumaric acid esters, glycerol esters, pentaerythritol esters and other esters of rosin and hydrogenated rosin, copper resinate, zinc resinate, calcium resinate, magnesium resinate and other metal resinates of rosin and polymerised rosin and others as described in WO 97/44401;
resin acids and derivatives thereof such as copal resin and sandarach resin; other carboxylic acid containing compounds such as abietic acid, neoabietic acid, dehydroabietic acid, dihydroabietic acid, tetrahydroabietic acid, secodehydroabietic acid, pimaric acid, paramatrinic acid, isoprimaric acid, levoprimaric acid, agathenedicarboxylic acid, sandaracopimalic acid, lauric acid, stearic acid, isostearic acid, oleic acid, linoleic acid, linolenic acid, isononanoic acid, versatic acid, naphthenic acid, tall oil fatty acid, coconut oil fatty acid, soyabean oil fatty acid and derivatives thereof;
hydrocarbon resins, aliphatic, aromatic or dicyclopentadiene based hydrocarbon resins;
silyl ester copolymers, for example as described in US 4,593,055, EP 0 646 630 and NO 2007 3499;
acid functional polymers of which the acid group is blocked with divalent metals bonded to a monovalent organic residue, for example as described in EP 0 204 456 and EP 0 342 276; or divalent metals bonded to a hydroxyl residue, for example as described in GB 2 311 070 and EP 0 982 324; or amine for example as described in EP 0 529 693;
hydrophilic copolymers for example (meth)acrylate copolymers as described in GB 2 152 947 and poly(N-vinyl pyrrolidone) copolymers and other copolymers as described in EP 0 526 441;
(meth)acrylic polymers and copolymers, such as poly(*n*-butyl acrylate), poly(*n*-butyl acrylate-*co*-isobutyl vinyl ether);
vinyl ether polymers and copolymers, such as poly(methyl vinyl ether), poly(ethyl vinyl ether), poly(isobutyl vinyl ether), poly(vinyl chloride-*co*-isobutyl vinyl ether);
aliphatic polyesters, such as poly(lactic acid), poly(glycolic acid), poly(2-hydroxybutyric acid), poly(3-hydroxybutyric acid), poly(4-hydroxyvaleric acid), polycaprolactone and aliphatic polyester copolymer containing two or more of the units selected from the above mentioned units;
metal containing polyesters for example as described in EP 1 033 392 and EP 1 072 625;
alkyd resins and modified alkyd resins; and
other condensation polymers as described in WO 96/14362.

Dehydrating agents and drying agents contribute to the storage stability of the antifouling coating composition by removing moisture introduced from raw materials, such as pigments and solvents, or water formed by reaction between carboxylic acid compounds and bivalent and trivalent metal compounds in the antifouling coating composition. The dehydrating agents and drying agents that may be used in the antifouling coating composition according to the present invention include organic and inorganic compounds. Examples of dehydrating agents and drying agents include anhydrous calcium sulphate, anhydrous magnesium sulphate, anhydrous sodium sulphate, anhydrous zinc sulphate, molecular sieves and zeolites; orthoesters such as trimethyl orthoformate, triethyl orthoformate, tripropyl orthoformate, triisopropyl orthoformate, tributyl orthoformate, trimethyl orthoacetate and triethyl orthoacetate; ketals; acetals; enolethers; orthoborates such as trimethyl borate, triethyl borate, tripropyl borate, triisopropyl borate, tributyl borate and tri-*tert*-butyl borate.

Other stabilizers that contribute to the storage stability of the antifouling coating composition are monomeric and polymeric carbodiimide compounds, such as bis(2,6-diisopropylphenyl)carbodiimide and poly(1,3,5-triisopropylphenylene-2,4-carbodiimide) and others as described in patent application EP 12189636.7.

Carbodiimides is preferred as stabilizer. Polymeric carbodiimides is most preferred. Acid scavengers can generally be used.

Examples of pigments are inorganic pigments such as titanium dioxide, iron oxides, zinc oxide, zinc phosphate, graphite and carbon black; organic pigments such as phthalocyanine compounds and azo pigments.

Examples of extenders and fillers are minerals such as dolomite, plastorite, calcite, quartz, barite, magnesite, aragonite, silica, wollastonite, talc, chlorite, mica, kaolin and feldspar; synthetic inorganic compounds such as calcium carbonate, magnesium carbonate, barium sulphate, calcium silicate and silica; polymeric and inorganic microspheres such as uncoated or coated hollow and solid glass beads, uncoated or coated hollow and solid ceramic beads, porous and compact beads of polymeric materials such as poly(methyl methacrylate), poly(methyl methacrylate-co-ethylene glycol dimethacrylate), poly(styrene-co-ethylene glycol dimethacrylate), poly(styrene-co-divinylbenzene), polystyrene, poly(vinyl chloride).

Examples of additives that can be added to an antifouling coating composition are reinforcing agents, thixotropic agents, thickening agents, anti-settling agents, plasticizers and solvents.

Examples of reinforcing agents are flakes and fibres. Fibres include natural and synthetic inorganic fibres such as silicon-containing fibres, carbon fibres, oxide fibres, carbide fibres, nitride fibres, sulphide fibres, phosphate fibres, mineral fibres; metallic fibres; natural and synthetic organic fibres such as cellulose fibres, rubber fibres, acrylic fibres, polyamide fibres, polyimide, polyester fibres, polyhydrazide fibres, polyvinylchloride fibres, polyethylene fibres and others as described in WO 00/77102. Preferably, the fibres have an average length of 25 to 2,000 $\mu$m and an average thickness of 1 to 50 $\mu$m with a ratio between the average length and the average thickness of at least 5.

Examples of thixotropic agents, thickening agents and anti-settling agents are silicas such as fumed silicas, organo-modified clays, amide waxes, polyamide waxes, amide derivatives, polyethylene waxes, oxidised polyethylene waxes, hydrogenated castor oil wax, ethyl cellulose, aluminium stearates and mixtures of thereof.

Examples of plasticizers are chlorinated paraffins, phthalates, phosphate esters, sulphonamides, adipates and epoxidised vegetable oils.

In general, any of these optional components can be present in an amount ranging from 0.1 to 50 wt%, typically 0.20 to 20 wt%, preferably 0.50 to 15 wt% of the antifouling composition. It will be appreciated that the amount of these optional components will vary depending on the end use.

It is highly preferred if the antifouling composition contains a solvent. This solvent is preferably volatile and is preferably organic. It may have an evaporation rate of more than 0.05 (n-BuAc = 1). Examples of organic solvents and thinners are aromatic hydrocarbons such as xylene, toluene, mesitylene; ketones methyl ethyl ketone, methyl isobutyl ketone, methyl isoamyl ketone, cyclopentanone, cyclohexanone; esters such as butyl acetate, tert-butyl acetate, amyl acetate, isoamyl acetate, ethylene glycol methyl ether acetate; ethers such as ethylene glycol dimethyl ether, diethylene glycol dimethyl ether, dibutyl ether, dioxane, tetrahydrofuran, alcohols such as benzyl alcohol; ether alcohols such as 1-methoxy-2-propanol; aliphatic hydrocarbons such as white spirit; and optionally a mixture of two or more solvents and thinners.

Preferred solvents are aromatic solvents, optionally together with butylacetate, especially xylene and mixtures of aromatic hydrocarbons.

The amount of solvent is preferably as low as possible but is preferably sufficient to dissolve the polyoxalate. The solvent content may be up to 50 wt% of the composition, preferably up to 45 wt% of the composition, such as up to 40 wt% but may be as low as 15 wt% or less, e.g. 10 wt% or less. Again, the skilled man will appreciate that the solvent content will vary depending on the other components present and the end use of the coating composition.

Alternatively the coating can be dispersed in an organic non-solvent for the film-forming components in the coating composition or in an aqueous dispersion.

The antifouling coating composition of the invention can be applied to a whole or part of any object surface which is subject to fouling. The surface may be permanently or intermittently underwater (e.g. through tide movement, different cargo loading or swell). The object surface will typically be the hull of a vessel or surface of a fixed marine object such as an oil platform or buoy. Application of the coating composition can be accomplished by any convenient means, e.g. via painting (e.g. with brush or roller) or spraying the coating onto the object. Typically the surface will need to be separated from the seawater to allow coating. The application of the coating can be achieved as conventionally known in the art.

The invention will now be defined with reference to the following non limiting examples and figures.

Figure 1 shows that the antifouling coating compositions containing hydrogenated bisphenol A as a diol component display good polishing properties, even when not cured. Good hardness is also observed.
Figure 2 shows polishing rates for inventive, cured compositions C6-C10.
Figure 3 shows polishing properties of inventive, cured compositions C11-C15
Figure 4 shows polishing properties of comparative composition CC1.
Figure 5 shows polishing properties of comparative composition CC2.

<u>Determination of polymer solution viscosity</u>

The viscosity of the polymers are determined in accordance with ASTM D2196-10 using a Brookfield DV-I

viscometer with LV-2 or LV-4 spindle at 12 rpm. The polymers are temperated to 23.0°C ± 0.5°C before the measurements.

Determination of solids content of the polymer solutions

The solids content in the polymer solutions are determined in accordance with ISO 3251:2008. A test sample of 0.6 g ± 0.1 g are taken out and dried in a ventilated oven at 150°C for 30 minutes. The weight of the residual material is considered to be the non-volatile matter (NVM). The non-volatile matter content is expressed in weight percent. The value given is the average of three parallels.

Determination of polymer average molecular weights distribution

The polymers are characterised by Gel Permeation Chromatography (GPC) measurement. The molecular weight distribution (MWD) was determined using a Polymer Laboratories PL-GPC 50 instrument with two PLgel 5 μm Mixed-D columns (300 x 7.5 mm) from Polymer Laboratories in series, tetrahydrofuran (THF) as eluent at ambient temperature and at a constant flow rate of 1 mL/min and with a refractive index (RI) detector. The columns were calibrated using polystyrene standards Easivials PS-H from Polymer Laboratories. The data were processed using Cirrus software from Polymer Labs.

Samples were prepared by dissolving an amount of polymer solution corresponding to 25 mg dry polymer in 5 mL THF. The samples were kept for minimum 3 hours at room temperature prior to sampling for the GPC measurements.

The weight-average molecular weight (Mw), the number-average molecular weight (Mn) and the polydispersity index (PDI), equivalent to Mw/Mn, are reported in the tables.

Determination of the glass transition temperature

The glass transition temperature (Tg) is obtained by Differential Scanning Calorimetry (DSC) measurements. The DSC measurements were performed on a TA Instruments DSC Q200. Samples were prepared by transfering a small amount of polymer solution to an aluminium pan and dry the samples for minimum 10 h at 50°C and 3 h at 150°C. The samples of approx. 10 mg dry polymer material were measured in open aluminum pans and scans were recorded at a heating and cooling rate of 10°C/min with an empty pan as reference. The data were processed using Universal Analysis software from TA Instruments. The inflection point of the glass transition range, as defined in ASTM E1356-08, of the second heating is reported as the Tg of the polymers.

Coating film hardness - König pendulum hardness

Pendulum hardness tests were performed according to ISO 1522:2006. Each of the antifouling coating compositions was applied to a transparent glass plate (100×200×2 mm) using a film applicator with 300 μm gap size. The coating films were dried for 24 h (or 72 h) at 23°C and then 72 h at 50°C. The coating film hardness of the dry coating film was measured at a temperature of 23°C and relative humidity of 50% using a Erichsen 299/300 pendulum hardness tester. The hardness is quantified as the number of pendulum swings to damp the amplitude from 6° to 3°.

Determination of polishing rates of antifouling coating films in sea water

The polishing rate is determined by measuring the reduction in film thickness of a coating film over time. For this test PVC disc are used. The coating compositions are applied as radial stripes on the disc using a film applicator with a gap size of 300 μm. The thickness of the dry coating films are measured by means of a contact surface profiler. The PVC discs are mounted on a shaft and rotated in a container in which seawater is flowing through. Natural seawater which has been filtered and temperature-adjusted to 25°C ± 2°C is used. The PVC discs are taken out at regular intervals for measuring the film thickness. The discs are rinsed and allowed to dry overnight at room temperature before measuring the film thickness.

Polymer synthesis

Synthesis of the polyoxalates used in the Examples were made using the following general procedure.

Monomers and catalyst are added in the amounts indicated in the Table to a 250-mL temperature controlled reaction vessel equipped with a mechanical stirrer, nitrogen inlet and distillation equipment. The mixture is slowly heated to 190°C under nitrogen atmosphere while the condensate is distilled off. The heating rate is controlled so the temperature off the distillate does not exceed the boiling point of the condensate. The temperature is kept at 190°C until 80-90% of

the theoretical amount of condensate has been removed. The nitrogen inlet is closed and vacuum is applied. The vacuum is gradually decreased to the values shown in the Tables. The temperature is increased to 200°C. The stirring speed is gradually increased. The vacuum is applied for 1-5 hours. The polymer is cooled to 150°C under vacuum. The vacuum is removed and xylene is added to obtain the desired non-volatile matter. The polymer solution is cooled to room temperature.

The amount of hydroxyl groups present in the polymer is calculated from the number-average molecular weight ($M_n$). It is assumed that one end of the polymer chain consists of a hydroxyl group when a 1:1 molar ratio between diesters and diols are used. Based on this the amount of curing agent needed can be calculated. 50 ppm of curing catalyst relative the amount of hydroxyl groups is used.

<u>Calculation example - amount of curing agent and curing catalyst:</u>

PO-1 (Polymer 1)
$M_n$ = 3137 g/mol, wt% solid = 67.3%
If 1 g of polymer solution is used in the paint
$n_{OH}$ = (wt% solid x $m_{polymer}$) / ($M_n$ x 1) (as a 1:1 molar ratio between diesters and diols is used in PO-1) $n_{OH}$ = (0.673 x 1) / (3137 x 1) mol
If 1 equiv of curing agent is used → $n_{OH} = n_{NCO}$ = (0.673 x 1) / (3137 x 1) mol
If Desmodur XP2580 is used, NCO content = 19.5 wt%, $M_{w\,NCO}$= 42.02 g/mol

$$m_{XP2580} = (n_{NCO} \text{ x } M_{w\,NCO}) / \text{NCO content}$$

$$m_{XP2580} = (((0.673 \text{ x } 1) / (3137 \text{ x } 1)) \text{ x } 42.02) / 0.195 = 0.046 \text{ g}$$

$$n_{cat} = n_{OH} \text{ x } 50 \text{ ppm}$$

Table 1. Information of the curing agents used in the examples.

| Curing agent | Type | NCO-content approx.. (%) | Form supplied | NCO-functionality |
|---|---|---|---|---|
| Desmodur XP2580 | IPDI Allophanate | 19.5 | 100% | 2.0 < F < 2.8 |
| Desmodur N75 | HDI Biuret | 16.5 | 75% in butylacetate | F > 3.6 |

Five inventive (PO-1 to PO-5) and four comparative (POC-1 to POC-4) polyoxalate polymers were prepared according to the above method. Data is shown in Table 2. The inventive polymers were used to prepare antifouling coating compositions C1 to C15, shown in Tables 3 and 4. Comparative composition examples CC-1 to CC-2 are shown in Table 5.

Table 2: Inventive and Comparative Polyoxalate Polymers

| | | Example number | PO-1 | PO-2 | PO-3 | PO-4 | PO-5 |
|---|---|---|---|---|---|---|---|
| Polymer synthesis | Diesters (mol%) | Diethyloxalate | 35 | 35 | 35 | 35 | 35 |
| | | Dimethyl isophthalate | 15 | 15 | 15 | 15 | 15 |
| | Diols (mol%) | 2-Butyl-2-ethyl-1,3-propanediol | 35 | 27.5 | 25 | 29 | 35 |
| | | 1,4-Cyclohexanedimethanol | 10 | 17.5 | 11.3 | - | - |
| | | 1,6-Hexanediol | - | - | - | 10 | - |
| | | Hydrogenated bisphenol A | 5 | 5 | 13.8 | 11 | 15 |
| | Catalyst (mol%) | Dibutyltin oxid | 0.02 | 0.02 | 0.02 | 0.02 | 0.02 |
| | Time to reach end vacuum | | 2 h | 2 h | 2.5 h | 2.5 h | 4 h |
| | End vacuum | | 8 mbar, 3h | 42 mbar, 3 h | 54 mbar, 4 h | 48 mbar, 4 h | 60 mbar, 1 h |
| Polymer properties | Theoretical NVM (wt%) | | 70.0 | 70.0 | 70.0 | 70.0 | 70.0 |
| | Actual NVM (wt%) | | 67.3 | 69.5 | 67.0 | 68.9 | 69.4 |
| | Viscosity (cP) | | 2699 | 6899 | 1752 | 3049 | 2999 |
| | Mw (g/mol) | | 7375 | 9792 | 5215 | 7794 | 5385 |
| | Mn (g/mol) | | 3137 | 3824 | 2067 | 3142 | 2463 |
| | PDI | | 2.4 | 2.6 | 2.5 | 2.5 | 2.2 |
| | Tg inflection (°C) | | 19.8 | 24.6 | 29.2 | 17.7 | 28.2 |

| | | Comparative Example number | POC-1 | POC-2 |
|---|---|---|---|---|
| Polymer synthesis | Diesters (mol%) | Diethyloxalate | 35 | 35 |
| | | Dimethyl isophthalate | 15 | 15 |
| | Diols (mol%) | 2-Butyl-2-ethyl-1,3-propanediol | 32.5 | 27.5 |
| | | 1,4-Cyclohexanedimethanol | 17.5 | 17.5 |
| | | 1,6-Hexanediol | - | - |
| | | 2,2,4,4-tetramethyl-1,3-cyclobutanediol | - | 5 |
| | Catalyst (mol%) | Dibutyltin oxid | 0.02 | 0.02 |
| | Time to reach end vacuum | | 3 h | 4 h |
| | End vacuum | | 12 mbar, 3 h | 13 mbar, 2.5 h |
| Polymer properties | Theoretical NVM (wt%) | | 60.0 | 70.0 |
| | Actual NVM (wt%) | | 59.1 | 67.8 |
| | Viscosity (cP) | | 865 | 4849 |
| | Mw (g/mol) | | 15382 | 14142 |
| | Mn (g/mol) | | 4180 | 4592 |
| | PDI | | 3.7 | 3.1 |
| | Tg inflection (°C) | | 14.2 | 20.6 |

| | Comparative Example number | | POC-3 | POC-4 |
|---|---|---|---|---|
| Polymer synthesis | Diesters (mol%) | Diethyloxalate | 35 | 35 |
| | | Dimethyl isophthalate | 15 | 15 |
| | Diols (mol%) | 2-Butyl-2-ethyl-1,3-propanediol | 35 | 27.5 |
| | | 1,4-Cyclohexanedimethanol | - | 17.5 |
| | | Bisphenol A | 15 | 5 |
| | | 2,2,4,4-tetramethyl-1,3-cyclobutanediol | - | - |
| | Catalyst (mol%) | Dibutyltin oxid | 0.02 | 0.02 |

| | | | |
|---|---|---|---|
| | Time to reach end vacuum | 4 h | 4 h |
| | End vacuum | 10 mbar, 2.5 h | 15 mbar, 2.5 h |
| **Polymer properties** | Theoretical NVM (wt%) | 70.0 | 70.0 |
| | Actual NVM (wt%) | 66.7 | 68.7 |
| | Viscosity (cP) | 362 | 1180 |
| | Mw (g/mol) | 2658 | 4929 |
| | Mn (g/mol) | 1604 | 2685 |
| | PDI | 1.7 | 1.8 |
| | Tg inflection (°C) | 5.2 | 10.9 |

POC-3 and POC-4 use bisphenol A. The Tg data show that hydrogenated bisphenol A gives a polymer with higher Tg than bisphenol A.

Table 3: Inventive Antifouling Compositions - No curing agent present

| **Example Number** | **C-1** | **C-2** | **C-3** | **C-4** | **C-5** |
|---|---|---|---|---|---|
| | PO-1 | PO-2 | PO-3 | PO-4 | PO-5 |
| | 22.40 | 21.57 | 22.51 | 21.79 | 21.61 |
| Disparlon A603-20X (wt%) | 2.41 | 2.42 | 2.41 | 2.41 | 2.42 |
| Cuprous oxide (wt%) | 52.30 | 52.37 | 52.29 | 52.36 | 52.37 |
| Copper pyrithione (wt%) | 1.90 | 1.91 | 1.90 | 1.91 | 1.91 |
| Iron oxide (wt%) | 1.98 | 1.98 | 1.98 | 1.98 | 1.98 |
| Talc (wt%) | 4.92 | 4.93 | 4.92 | 4.93 | 4.93 |
| Zinc oxide (wt%) | 4.92 | 4.93 | 4.92 | 4.92 | 4.93 |
| Xylene (wt%) | 3.78 | 4.51 | 3.68 | 4.32 | 4.48 |
| Butylacetate (wt%) | 5.38 | 5.39 | 4.92 | 5.39 | 5.39 |
| Calculated VOC (g/L) | 394 | 394 | 394 | 394 | 394 |
| Volume% solid | 57.0 | 57.0 | 57.0 | 57.0 | 57.0 |
| Pendulum hardness - 72h at 23°C (oscillations) | 7 | 7 | 6 | 9 | 7 |
| Pendulum hardness - 72h at 50°C (oscillations) | 34 | 56 | 66 | 30 | 66 |

Table 4: Inventive Antifouling Compositions - Curing agent present

| Example Number | C-6 | C-7 | C-8 | C-9 | C-10 |
|---|---|---|---|---|---|
| | **Component A** | **Component A** | **Component A** | **Component A** | **Component A** |
| | PO-1 | PO-2 | PO-3 | PO-4 | PO-5 |
| | 22.40 | 21.57 | 22.51 | 21.79 | 21.61 |
| Disparlon A603-20X (wt%) | 2.41 | 2.42 | 2.41 | 2.41 | 2.42 |
| Cuprous oxide (wt%) | 52.30 | 52.37 | 52.29 | 52.36 | 52.37 |
| Copper pyrithione (wt%) | 1.90 | 1.91 | 1.90 | 1.91 | 1.91 |
| Iron oxide (wt%) | 1.98 | 1.98 | 1.98 | 1.98 | 1.98 |
| Talc (wt%) | 4.92 | 4.93 | 4.92 | 4.93 | 4.93 |
| Zinc oxide (wt%) | 4.92 | 4.93 | 4.92 | 4.92 | 4.93 |
| Xylene (wt%) | 3.78 | 4.51 | 3.68 | 4.32 | 4.48 |
| Butylacetate (wt%) | 5.38 | 5.39 | 5.38 | 5.39 | 5.39 |
| Calculated VOC (g/L) | 394 | 394 | 394 | 394 | 394 |
| Volume% solid | 57.0 | 57.0 | 57.0 | 57.0 | 57.0 |
| | **Component B** | **Component B** | **Component B** | **Component B** | **Component B** |
| Type of curing agent | Desmodur XP2580 | Desmodur XP2580 | Desmodur XP2580 | Desmodur XP2580 | Desmodur XP2580 |
| Amount of curing agent - wt% relative amount of binder | 0.033 | 0.028 | 0.049 | 0.034 | 0.043 |
| Catalyst (dibutyltin dilaurate) | 50 ppm | 50 ppm | 50 ppm | 50 ppm | 50 ppm |
| | **Component A+B** | **Component A+B** | **Component A+B** | **Component A+B** | **Component A+B** |
| Pendulum hardness - 24h at 23°C (oscillations) | 5 | 6 | 5 | 5 | 6 |
| Pendulum hardness - 72h at 50°C (oscillations) | 38 | 59 | 72 | 35 | 71 |

| Example Number | C-11 | C-12 | C-13 | C-14 | C-15 |
|---|---|---|---|---|---|
| | **Component A** | **Component A** | **Component A** | **Component A** | **Component A** |
| | PO-1 | PO-2 | PO-3 | PO-4 | PO-5 |
| | 22.40 | 21.57 | 22.51 | 21.79 | 21.61 |
| Disparlon A603-20X (wt%) | 2.41 | 2.42 | 2.41 | 2.41 | 2.42 |
| Cuprous oxide (wt%) | 52.30 | 52.37 | 52.29 | 52.36 | 52.37 |
| Copper pyrithione (wt%) | 1.90 | 1.91 | 1.90 | 1.91 | 1.91 |
| Iron oxide (wt%) | 1.98 | 1.98 | 1.98 | 1.98 | 1.98 |
| Talc (wt%) | 4.92 | 4.93 | 4.92 | 4.93 | 4.93 |
| Zinc oxide (wt%) | 4.92 | 4.93 | 4.92 | 4.92 | 4.93 |
| Xylene (wt%) | 3.78 | 4.51 | 3.68 | 4.32 | 4.48 |
| Butylacetate (wt%) | 5.38 | 5.39 | 5.38 | 5.39 | 5.39 |
| Calculated VOC (g/L) | 394 | 394 | 394 | 394 | 394 |
| Volume% solid | 57.0 | 57.0 | 57.0 | 57.0 | 57.0 |
| | **Component B** | **Component B** | **Component B** | **Component B** | **Component B** |
| Type of curing agent | Desmodur N75 | Desmodur N75 | Desmodur N75 | Desmodur N75 | Desmodur N75 |
| Amount of curing agent - wt% relative amount of binder | 0.053 | 0.045 | 0.079 | 0.054 | 0.069 |
| Catalyst (dibutyltin dilaurate) | 50 ppm | 50 ppm | 50 ppm | 50 ppm | 50 ppm |
| | **Component A+B** | **Component A+B** | **Component A+B** | **Component A+B** | **Component A+B** |
| Pendulum hardness - 24h at 23°C (oscillations) | 5 | 6 | 6 | 6 | 7 |
| Pendulum hardness - 72h at 50°C (oscillations) | 44 | 62 | 76 | 42 | 76 |

Table 5: Comparative Antifouling Compositions

| **Comparative Example Number** | **CC-1** | **CC-2** |
|---|---|---|
| | **Component A** | **Component A** |
| | POC-1 | POC-2 |
| | 25.63 | 22.31 |
| Disparlon A603-20X (wt%) | 2.42 | 2.43 |

(continued)

| Comparative Example Number | CC-1 | CC-2 |
|---|---|---|
| | **Component A** | **Component A** |
| Disparlon A4401-25X (wt%) | 0.52 | 0.52 |
| Cuprous oxide (wt%) | 52.00 | 52.07 |
| Copper pyrithione (wt%) | 2.28 | 2.28 |
| Iron oxide (wt%) | 1.89 | 1.90 |
| Talc (wt%) | 4.59 | 4.59 |
| Zinc oxide (wt%) | 5.49 | 5.50 |
| Xylene (wt%) | 0.18 | 3.68 |
| Butylacetate (wt%) | 5.00 | 4.73 |
| Calculated VOC (g/L) | 392 | 390 |
| Volume% solid | 58.0 | 58.0 |
| | **Component B** | **Component B** |
| Type of curing agent | Desmodur N75 | Desmodur XP2580 |
| Amount of curing agent - wt% relative amount of binder | 0.034 | 0.022 |
| Catalyst (dibutyltin dilaurate) | 50 ppm | 50 ppm |
| | **Component A+B** | **Component A+B** |
| Pendulum hardness - 24h at 23°C (oscillations) | 11 | 7 |
| Pendulum hardness - 72h at 50°C (oscillations) | 21 | 43 |

Polishing Properties

The polishing rates of the inventive and comparative antifouling coating compositions were measured and compared. Results are shown in Figures 1 to 5.

Figure 1 shows that the antifouling coating compositions containing hydrogenated bisphenol A as a diol component display good polishing properties, even when not cured. Good hardness is also observed.

## Claims

**1.** A binder for a marine antifouling coating composition comprising:

a polyoxalate polymer with a Mw of at least 4000 g/mol, wherein said polyoxalate polymer comprises:

(i) a residue of an oxalate monomer selected from oxalic acid or a diester derivative thereof;
(ii) a residue of a second monomer selected from a cyclic diester or cyclic diacid; and
(iii) a residue of a third monomer which is hydrogenated bisphenol A.

**2.** A binder according to claim 1, wherein said oxalate monomer (i) is selected from oxalic acid and a dialkyl oxalate.

**3.** A binder according to claim 1 or 2, wherein said oxalate monomer (i) is a dialkyl oxalate preferably selected from dimethyl oxalate, diethyl oxalate, dipropyl oxalate or dibutyl oxalate, preferably diethyl oxalate.

**4.** A binder according to any of claims 1 to 3, wherein said oxalate monomer (i) is present in an amount of greater than 20 mol% relative to the amount of monomers in the polyoxalate in total.

**5.** A binder according to any of claims 1 to 4, wherein said second monomer (ii) is an aromatic diester or aromatic diacid.

**6.** A binder according to any of claims 1 to 5, wherein both monomers (i) and (ii) are diesters.

**7.** A binder according to any of claims 1 to 6, wherein said second monomer (ii) is dimethyl isophthalate.

**8.** A binder composition according to any of claims 1 to 7, wherein the second monomer (ii) is present in an amount of between 5-50 mol% relative to the amount of monomers in the polyoxalate in total..

**9.** A binder composition according to any of claims 1 to 8, wherein said polyoxalate further comprises the residue of a fourth monomer (iv) which is a diol different to monomer (iii).

**10.** A binder according to any of claims 1 to 9, wherein the hydrogenated bisphenol A (iii) is present in an amount of 0.1 to 30 mol% relative to the amount of monomers in the polyoxalate in total.

**11.** A binder according to any of claims 1 to 10, wherein the Mw of the polyoxalate is at least 5000 g/mol.

**12.** A marine antifouling coating composition comprising:

I) a polyoxalate polymer binder as claimed in claim 1 to 11; and
(II) a marine antifouling agent.

**13.** An antifouling coating composition according to claim 12, wherein said composition does not comprise a curing agent or is not cured.

**14.** An antifouling coating composition according to any of claims 12 to 13 comprising one or more solvents, e.g. xylene.

**15.** A process for the preparation of a binder for a marine antifouling coating composition comprising polymerising:

(i) an oxalate monomer selected from oxalic acid or a diester derivative thereof;
(ii) a second monomer which is a cyclic diester or cyclic diacid; and
(iii) a third monomer which is hydrogenated bisphenol A so as to form a polyoxalate polymer with a Mw of at least 4000 g/mol.

**16.** An object coated with an optionally cured antifouling coating as claimed in any of claims 12 to 14.

**Figures**

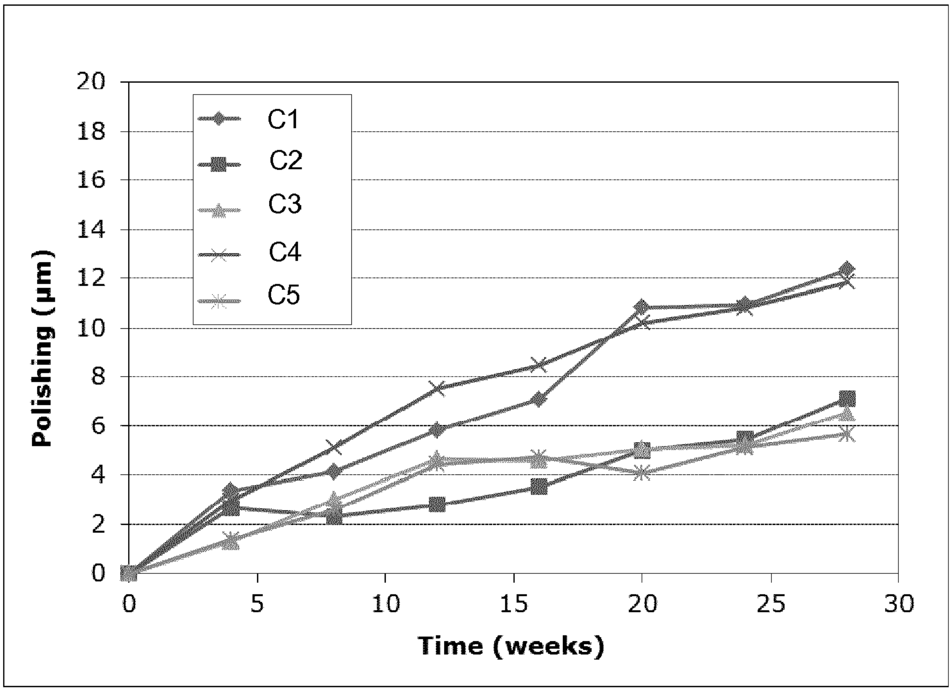


**Figure 1:** Polishing rates for inventive, uncured compositions C1-C5.

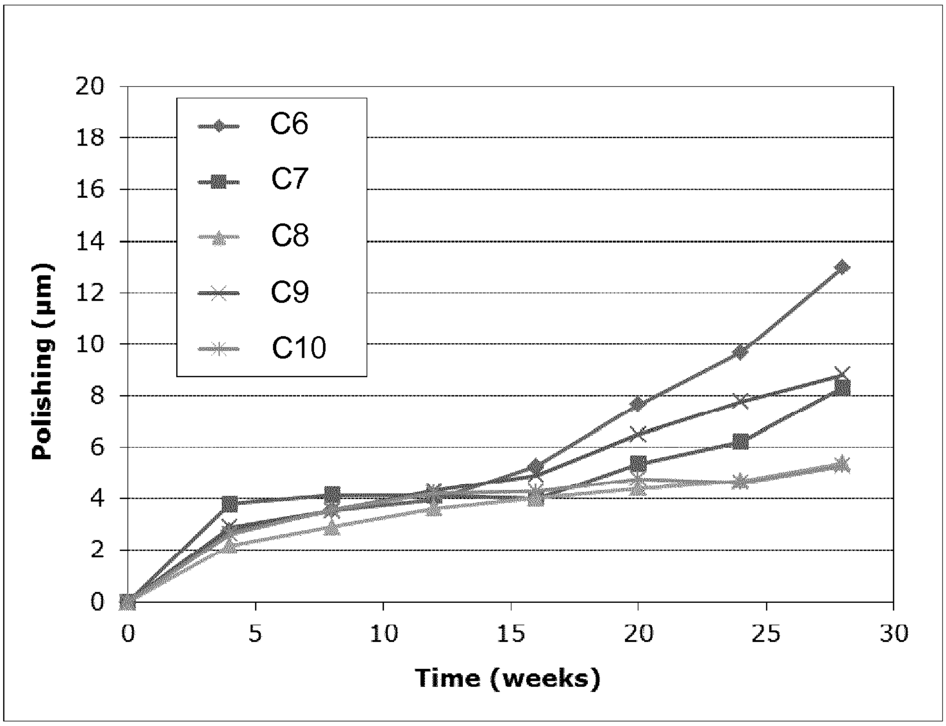


**Figure 2**: Polishing rates for inventive, cured compositions C6-C10.

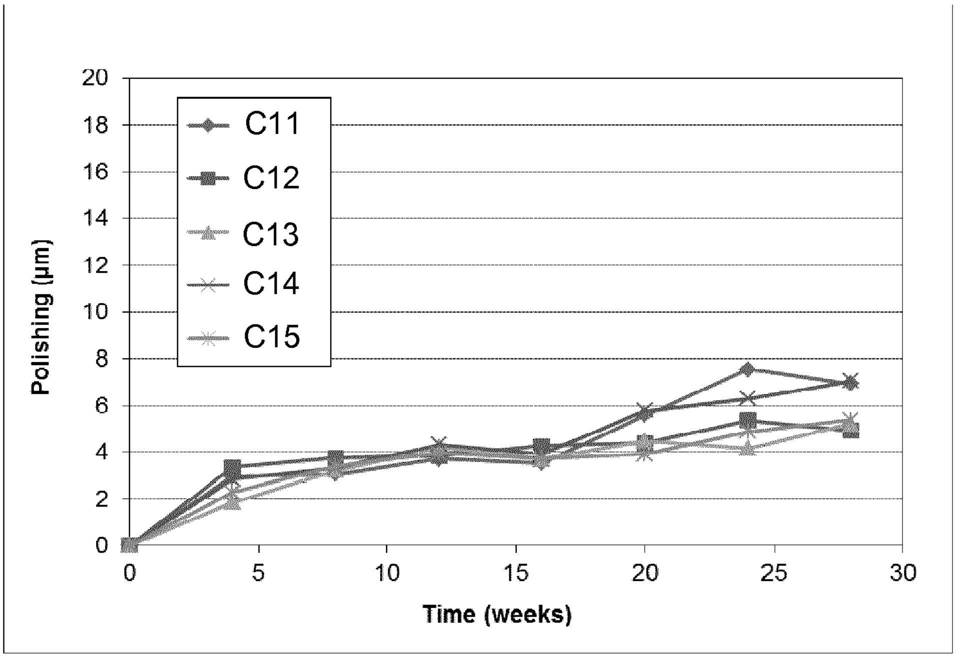


**Figure 3:** Polishing properties of inventive, cured compositions C11-C15

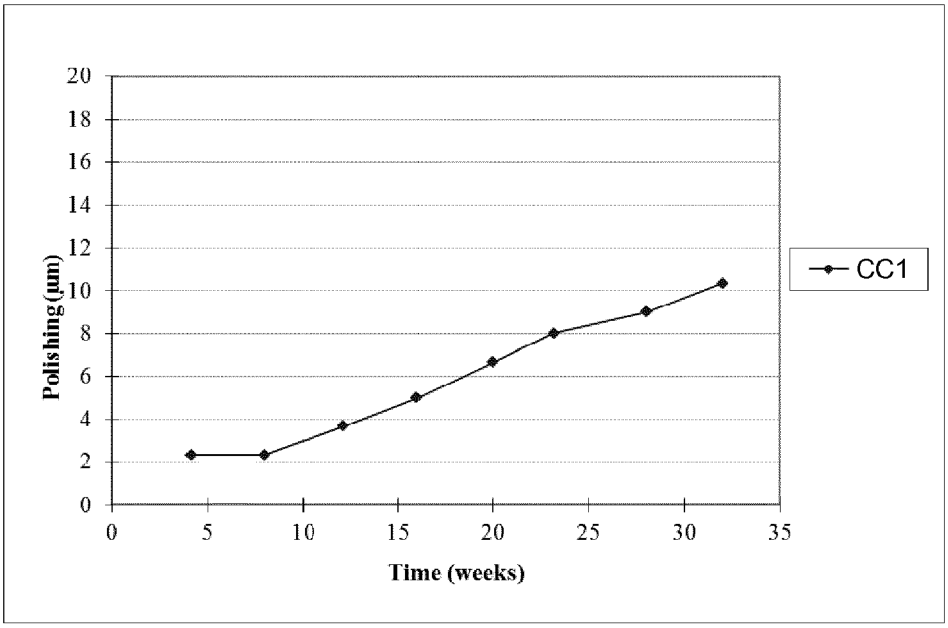


**Figure 4:** Polishing properties of comparative composition CC1.

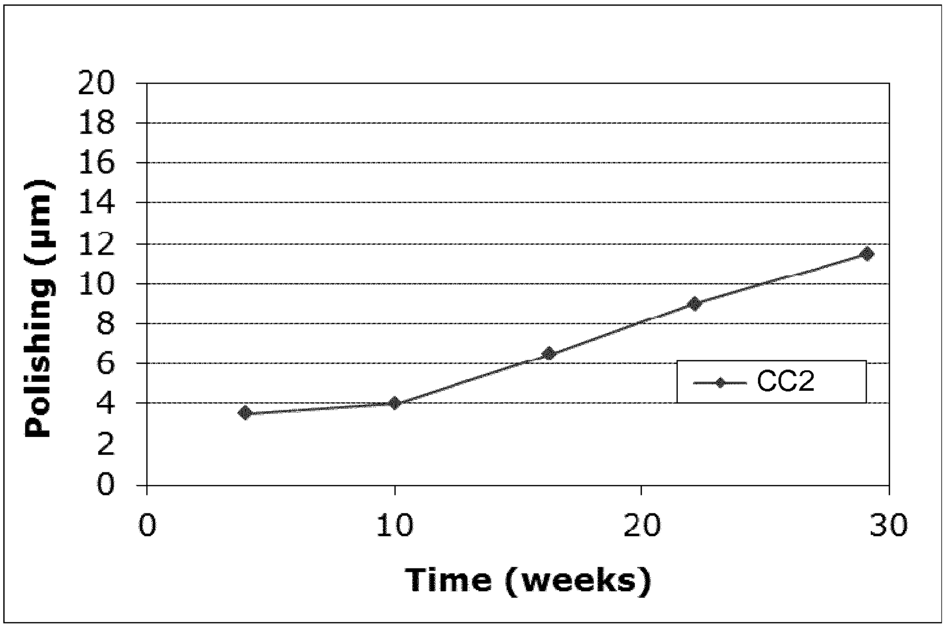


**Figure 5:** Polishing properties of comparative composition CC2.

Europäisches Patentamt
European Patent Office
Office européen des brevets

# EUROPEAN SEARCH REPORT

Application Number
EP 14 15 3416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 1 033 392 A2 (KANSAI PAINT CO LTD [JP]) 6 September 2000 (2000-09-06) * claim 1 * * paragraphs [0014] - [0016] * * paragraph [0020] * ----- | 1-16 | INV. C09D5/16 C08G63/199 C09D167/02 |

TECHNICAL FIELDS SEARCHED (IPC)
C09D
C08K
C08G

The present search report has been drawn up for all claims

1

| Place of search | Date of completion of the search | Examiner |
|---|---|---|
| The Hague | 3 July 2014 | Scheunemann, Sven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 15 3416

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2014

| Patent document cited in search report | Publication date | Patent family member(s) | Publication date |
|---|---|---|---|
| EP 1033392 A2 | 06-09-2000 | EP 1033392 A2 | 06-09-2000 |
| | | JP 2000248207 A | 12-09-2000 |
| | | SG 102567 A1 | 26-03-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0646630 A
- EP 0802243 A
- EP 1342756 A
- EP 1479737 A
- EP 1641862 A
- WO 0077102 A
- WO 03070832 A
- WO 03080747 A
- WO 2004096927 A
- EP 1505097 A
- WO 2009100908 A
- WO 9744401 A
- US 4593055 A
- NO 20073499
- EP 0204456 A
- EP 0342276 A
- GB 2311070 A
- EP 0982324 A
- EP 0529693 A
- GB 2152947 A
- EP 0526441 A
- EP 1033392 A
- EP 1072625 A
- WO 9614362 A
- EP 12189636 A